**Europäisches Patentamt**

**European Patent Office**

**Office européen des brevets**

(11) Veröffentlichungsnummer: **0 073 843**

**A1**

(12) # EUROPÄISCHE PATENTANMELDUNG

(21) Anmeldenummer: 81106767.7

(22) Anmeldetag: 29.08.81

(51) Int. Cl.³: **F 24 J 3/02**
**E 04 D 1/30, E 04 D 13/00**

(43) Veröffentlichungstag der Anmeldung:
**16.03.83 Patentblatt 83/11**

(84) Benannte Vertragsstaaten:
**AT BE CH FR GB IT LI NL SE**

(71) Anmelder: **Kabel- und Metallwerke**
**Gutehoffnungshütte Aktiengesellschaft**
**Kabelkamp 20 Postfach 260**
**D-3000 Hannover 1(DE)**

(72) Erfinder: **Schimmelpfennig, Klaus, Dipl.-Ing.**
**Am Hohen Holze 20**
**D-3008 Garbsen(DE)**

(72) Erfinder: **Moser, Gerd**
**Nelkenstrasse 12**
**D-3204 Nordstemmen 1(DE)**

(72) Erfinder: **Mannaerts, Klaus**
**Am Kindergarten 20**
**D-3165 Hänigsen(DE)**

(54) **Dacheindeckung zur Aufnahme von Umgebungsenergie.**

(57) Eine Dachabdeckung aus Platten, Tafeln o.ä. aus Metallblech, die als Wärmetauscher zur Aufnahme von Wärmeenergie aus der Umgebung dient, weist folgende Merkmale auf:

   a) die Platten (12) weisen eine Vielzahl von längsverlaufenden Kanälen (15) auf,

   b) die Platten (12) sind im Abstand von mindestens 100 mm zu einem konventionellen Kaltdach (2 - 6) angeordnet,

   c) die Kanäle (15) der nebeneinandergelegenen Platten (12) sind untereinander flüssigkeitsdicht verbunden,

   d) die Platten (12) sind traufenseitig gegenüber dem konventionellen Kaltdach (2 - 6) zurückgesetzt.

EP 0 073 843 A1

Croydon Printing Company Ltd.

.0073843

K a b e l -  u n d  M e t a l l w e r k e
Gutehoffnungshütte Aktiengesellschaft

BEZEICHNUNG GEÄNDERT
siehe Titelseite

1-1748

15.04.80

Dachabdeckung mit Platten, Tafeln oder ähnliches zur Aufnahme von Wärmeenergie aus der Umgebung

Die Erfindung betrifft eine Dachabdeckung mit Platten,
Tafeln o.ä. aus Metallblech, insbesondere aus Kupferblech
die als Wärmetauscher zur Aufnahme von Wärmeenergie aus
der Umgebung dient.

Durch die zunehmende Verknappung und Verteuerung von
Primärenergie, wie Erdöl, Kohle, Erdgas usw. gewinnt die
Nutzung von Niedertemperaturwärme, wie Abwärme, Wärme aus
der Umgebungsluft und der Globalstrahlung zunehmend an Bedeutung. Dabei ist es bereits bekannt, die relativ großen
Flächen von Dächern für die Gewinnung von Energie aus der
Umgebung nutzbar zu machen.

Aus der DE-OS 27 32 758 ist eine Dachabdeckung aus plattenförmigen Elementen aus Metall bekannt, bei welcher die
Dachabdeckung aus einer Vielzahl von schindelförmigen
Elementen gebildet wird, welche leicht konisch verlaufende
Stege aufweisen, aufgrund welcher die einzelnen Elemente
übereinanderlappend ineinandergeschoben werden können und welche zwischen den Stegen eine Sicke aufweisen, in welcher ein Rohr eingelegt wird. Durch dieses Rohr hindurch wird das Wärmeträgermittel, beispielsweise einer Wärmepumpenanlage, hindurchgeführt und durch die Umgebungsenergie aufgewärmt. Diese Art der Dachabdeckung hat sich als Absorber für Energie aus der Umluft als hervorragend erwiesen und erweckt darüber hinaus den optischen Eindruck einer Ziegeleindeckung. Ein Nachteil dieser Dachabdeckung ist darin zu sehen, daß insbesondere für große Dachflächen der Montageaufwand relativ hoch ist. Weiterhin läßt der Wärmeübergang zwischen der Platte und dem Rohr noch zu wünschen übrig, da die Berührung zwischen dem Rohr und der Platte im Bereich der Sicke nicht flächenmäßig sondern nur linienförmig ist.

Der Erfindung liegt von daher die Aufgabe zugrunde, eine Dachabdeckung anzugeben, deren Wärmeaufnahmeleistung wesentlich höher liegt, als bei der bekannten Dachabdeckung und die insbesondere die Probleme, die durch die Bildung von Kondenswasser auftreten, wesentlich besser löst.

Diese Aufgabe wird bei einer Dachabdeckung der eingangs erwähnten Art durch die Kombination folgender Maßnahmen gelöst:

    a) die Platten, Tafeln o.ä. weisen eine Vielzahl von in Längsrichtung der Platten, Tafeln o.ä. verlaufenden nahtlosen Kanälen auf, die von dem Energie aufnehmenden Wärmeträgermittel durchströmt sind.

    b) die Platten, Tafeln o.ä. sind im Abstand von mindestens 100 mm zu einem konventionellen Kaltdach angeordnet

    c) die Platten, Tafeln o.ä. sind zu einem großflächigen Wärmetauscher zusammengefaßt, indem die Längskanten der Platten, Tafeln o.ä. flüssigkeitsdicht verbunden sind

**0073843**

d) der großflächige Wärmetauscher ist traufenseitig gegenüber dem konventionellen Kaltdach zurückgesetzt.

Bei der erfindungsgemäßen Dachabdeckung werden Platten, vorzugsweise aus Kupferblech, verwendet, in welcher mehrere parallel verlaufende Kanäle integriert sind, durch welche das Wärmeträgermittel strömt. Es besteht also ein direkter Wärmeübergang von der Platte über die Kanalwandung auf das in den Kanälen strömende Wärmeträgermittel. Dadurch, daß die Platten, Tafeln o.ä. im Abstand zu einem konventionellen Kaltdach angeordnet sind, können die Platten, Tafeln o.ä. auch von der Unterseite mit Frischluft angeströmt werden und somit der Umgebung mit beiden Seiten die Wärme entziehen. Der auf diese Weise hinterlüftete Zwischenraum zwischen dem konventionellen Kaltdach und den Platten, Tafeln o.ä. dient darüber hinaus noch dazu, daß evtl. entstehendes Schwitzwasser leicht abgeführt werden kann. Aus architektonischen Gründen sind die Platten, Tafeln o.ä. zu einem großflächigen Wärmetauscher zusammengefaßt, indem die Längskanten der Platten, Tafeln o.ä. flüssigkeitsdicht verbunden sind. Auf eine 100 %ige Dichtigkeit der äußeren die Energie aufnehmenden Oberfläche braucht dabei nicht geachtet zu werden, jedoch sollte die äußere Dachhaut genügend dicht sein, um Schnee oder Platzregen von dem konventionellen Kaltdach fernzuhalten. Nach dem letzten Merkmal des Anspruches 1 sollte der großflächige Wärmetauscher traufenseitig gegenüber dem konventionellen Kaltdach zurückgesetzt sein. Eine besondere Konstruktion für das Anbringen der Dachrinnen kann somit entfallen. Die Dachrinne ist an der Oberkante des konventionellen Kaltdaches befestigt. Das Maß für die Zurücksetzung des großflächigen Wärmetauschers sollte so ausgebildet sein, daß herabtropfendes oder herabfließendes Wasser von dem großflächigen Wärmetauscher direkt in die Regenrinne fließen oder strömen kann. Mit besonderem Vorteil ist der großflächige Wärmetauscher um mindestens 100 mm gegenüber einer senkrecht zum traufenseitigen Ende des Kaltdaches stehenden gedachten Fläche zurückgesetzt. Um eine optimale Hinterlüftung des zwischen dem großflächigen Wärmetauscher und dem konventionellen Kaltdach befindlichen Zwischenraumes zu bewerkstelligen, trägt das konventionelle Kaltdach eine auf den Dachsparren aufsitzende Konterlattung, auf welcher die Dachlatten befestigt sind, an denen wiederum der großflächige Wärmetauscher befestigt ist. Der zwischen den Konterlattungen liegende Raum zwischen dem Kaltdach und dem großflächigen Wärmetauscher ist traufenseitig durch ein Gewebe abgedichtet. Dieses Gewebe soll verhindern, daß Vögel oder Insekten eindringen können.

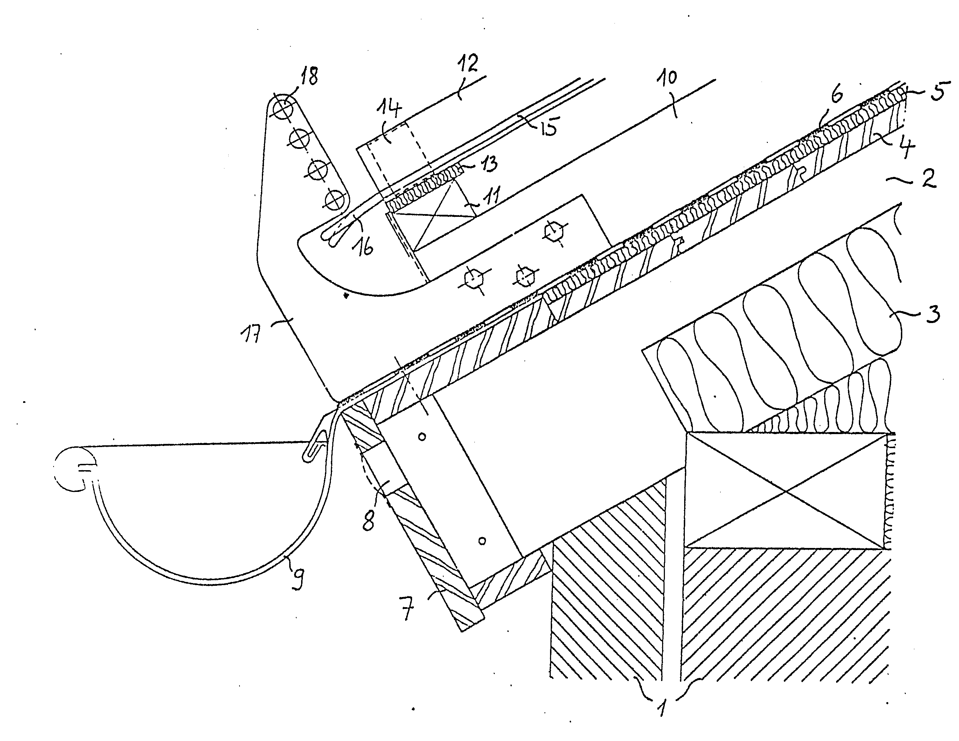

Die Erfindung ist anhand des in der Figur schematisch dargestellten Ausführungsbeispiels näher erläutert.

Das auf dem Mauerwerk 1 aufliegende Kaltdach besteht im wesentlichen aus den Dachsparren 2, zwischen denen eine Wärmedämmschicht 3 angeordnet ist. Auf den Dachsparren 2 sitzt die Verschalung 4, auf der unter Zwischenlegung einer weiteren Dämmschicht 5 die Dachdichtungsbahn 6 liegt. An den Enden der Dachsparren 2 sitzt ein Stirnbrett 7, welches eine Lüftungsklappe 8 aufweist, die eine Hinterlüftung des konventionellen Kaltdaches möglich macht. Eine Regenrinne 9 ist traufenseitig am Kaltdach befestigt.

Auf diesem Kaltdach konventioneller Bauart ist nun eine Konterlattung 10, und zwar an den Dachsparren 2, befestigt. Quer zu dieser Konterlattung 10 sind die Dachlatten 11, an denen die Platten 12 des großflächigen Wärmetauschers, die zweckmäßigerweise vom First bis zur Traufe reichen, befestigt. Da die Platten 12 normalerweise eine niedrigere Temperatur als die Umgebungsluft aufweisen, ist zwischen den Platten 12 und den Dachlatten 11 eine Wärmedämmschicht 13 vorgesehen.

Ist der großflächige Wärmetauscher aus Platten 12 aufgebaut, wie sie beispielsweise in der DE-OS 22 56 584 beschrieben sind, liegen auf der Isolierschicht 13 Haltebügel 14, die mit den Dachlatten 11 durch Edelstahlschrauben verbunden sind. An die Haltebügel 14 werden die Platten 12 klemmend befestigt, so daß sie sich in Längsrichtung ausdehnen können. Die Platten 12 weisen integrierte Kanäle 15 auf, die endseitig über Rohrstücke 16 traufenseitig miteinander verbunden sind und firstseitig an Vor- und Rücklaufleitungen einer Wärmepumpenanlage angeschlossen sind. Mit 17 sind Winkelstücke bezeichnet, die an der Konterlattung 10 befestigt sind und die Bohrungen 18 aufweisen, durch welche Rohre hindurchgeführt sind, die als Schneefanggitter dienen. Die Platten 12 sind gegenüber der Richtung des Stirnbrettes 7 um mindestens 100 mm zurückgesetzt, so daß das von den Platten 12 herabtropfende Schwitzwasser je nach anfallender Menge entweder auf die Dachdichtungsbahn 6 und dann in die Regenrinne 9 oder direkt in die Regenrinne 9 fließen kann. Fällt Regenwasser in großen Mengen an, so kann es aufgrund der zurückgesetzten Anordnung der Platten 12 nicht über die Regenrinne 9 fließen, sondern wird ebenfalls von dieser aufgenommen. Mit 19 ist noch ein Gewebe bezeichnet, welches den Raum zwischen den Konterlattungen 10 abdichtet.

K a b e l -   u n d   M e t a l l w e r k e
Gutehoffnungshütte Aktiengesellschaft

1-1748
15.04.80

P a t e n t a n s p r ü c h e

1. Dachabdeckung mit Platten, Tafeln o.ä. aus Metallblech, insbesondere aus Kupferblech, die als Wärmetauscher zur Aufnahme von Wärmenergie aus der Umgebung dient, gekennzeichnet durch die Kombination folgender Merkmale

 a) die Platten (12), Tafeln o.ä. weisen eine Vielzahl von in Längsrichtung der Platten (12), Tafeln o.ä. verlaufenden nahtlosen Kanälen (15) auf, die von dem Energie aufnehmenden Wärmeträgermittel durchströmt sind

 b) die Platten (12), Tafeln o.ä. sind im Abstand von mindestens 100 mm zu einem konventionellen Kaltdach (2-6) angeordnet

 c) die Platten (12), Tafeln o.ä. sind zu einem großflächigen Wärmetauscher zusammengefaßt, indem die Längskanten der Platten (12), Tafeln o.ä. flüssigkeitsdicht verbunden sind

 d) der großflächige Wärmetauscher ist traufenseitig gegenüber dem konventionellen Kaltdach (2-6) zurückgesetzt.

2. Dachabdeckung nach Anspruch 1, <u>dadurch gekennzeichnet,</u> daß der großflächige Wärmetauscher um mindestens 100 mm gegenüber einer senkrecht zum traufenseitigen Ende des Kaltdaches (2-6) stehenden gedachten Fläche (7) zurückgesetzt ist.

3. Dachabdeckung nach Anspruch 1 oder 2, <u>dadurch gekennzeichnet,</u> daß das konventionelle Kaltdach (2-6) eine auf den Dachsparren (2) aufsitzende Konterlattung (10) trägt, auf welcher die Dachlatten (11) befestigt sind, an denen der großflächige Wärmetauscher befestigt ist.

4. Dachabdeckung nach Anspruch 1 oder einem der folgenden, <u>dadurch gekennzeichnet,</u> daß der zwischen den Konterlattungen (10) liegende Raum zwischen dem Kaltdach (2-6) und dem großflächigen Wärmetauscher traufenseitig durch ein Gewebe (19) abgedichtet ist.

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | EP - A1 - 0 014 355 (VMH MULTIBETON)<br><br>* Fig. 4; Seite 2, Zeilen 14-23; Seite 7, Zeilen 33-36 *<br><br>-- | 1 |
| Y | DE - A1 - 2 802 682 (BAUER)<br><br>* Fig. 3; Seite 11, Zeilen 8-10 *<br><br>-- | 1 |
| A | DE - A1 - 2 651 847 (CONCORDIA)<br><br>* Gesamt *<br><br>-- | 1 |
| A | DE - A1 - 2 833 328 (WIENEKE)<br><br>* Gesamt *<br><br>-- | 1 |
| A | DE - A1 - 2 903 406 (DICK)<br><br>* Gesamt *<br><br>-- | 1 |
| A | EP - A1 - 0 018 543 (LAING)<br><br>* Gesamt *<br><br>-- | 1 |
| D | DE - A1 - 2 732 758 (GUTEHOFFNUNG-HÜTTE)<br><br>* Gesamt *<br><br>-- | |
| A | DE - A1 - 2 951 810 (HARINK)<br><br>* Fig. 1; Seite 1, 1. Absatz *<br><br>---- | 1 |

**KLASSIFIKATION DER ANMELDUNG (Int. Cl.³)**

F 24 J 3/02
E 04 D 1/30
E 04 D 13/00

**RECHERCHIERTE SACHGEBIETE (Int. Cl.³)**

F 24 J
E 04 D

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 15-04-1982 | SCHMIDT |

EPA form 1503.1 06.78